# EUROPEAN PATENT SPECIFICATION

(11) **EP 0 574 366 B1**
(45) Date of publication and mention of the grant of the patent: **05.02.1997**
(21) Application number: 93850117.8
(22) Date of filing: 04.06.1993
(51) Int. Cl.: D21F 11/14, D21F 3/02, D21F 5/04

(54) **Method and device for intensification of the operation of a Yankee press in a soft-tissue machine**
Verfahren und Vorrichtung zur Intensivierung der Wirkung einer Yankee Press in einer Tissuepapiermaschine
Procédé et dispositif pour intensifier l'opération d'une presse yankee dans une machine à fabriquer un papier absorbant

(30) Priority: 08.06.1992 FI 922649
(43) Date of publication of application: 15.12.1993
(73) Proprietor: VALMET CORPORATION, 00620 Helsinki (FI)
(72) Inventor: Hannus, Lars Hakan Mikael, SF-20750 Turku (FI); Enkvist, Jens Petter, SF-20540 Tutku (FI)
(74) Representative: Rostovanyi, Peter

(56) References cited:
- DE-B- 2 802 156

## Description

The invention concerns a method for intensification of the operation of a Yankee press in a soft-tissue machine, in accordance with the preamble of claim 1.

Further, the invention concerns a device for carrying out the method in accordance with the invention for intensification of the operation of the Yankee press in a soft-tissue machine, in accordance with the preamble of claim 9.

The preambles of claims 1 and 9 are based on DE-A-2 802 156, disclosing suction of drying medium from a Yankee cylinder hood by means of a suction roll defining a nip with the Yankee cylinder.

In the manufacture of paper, the fibrous web is formed in the wire part of the paper machine on an endless wire or between two wires. Next, water is drained out of the fibre web first, as a rule, by passing the fibrous web over a wire zone provided with suction boxes and possibly with suction rolls, in which zone the suction boxes and/or suction rolls suck water out of the web by means of negative pressure. Hereupon, the fibrous web is passed to the press section, where water is removed out of the web by pressing the web between press rolls. In the press section, the web is usually supported on a felt, out of which felt water is also removed at the same time, e.g., by making use of felt absorbers operating with negative pressure. After the press section, the web is usually dried by evaporation in the dryer section of the paper machine, in which the web runs over a Yankee cylinder provided with a Yankee hood. In view of the energy economy, dewatering of the web by means of mechanical pressing in the press section of a paper machine is substantially more advantageous than drying that takes place by evaporation in the dryer section, and the result achieved in the press section also affects the result of the dryer section.

When water is removed out of the paper web, the web is, as a rule, cooled, and then the viscosity of the water contained in the fibrous web becomes higher, whereby the dewatering in the following steps of pressing becomes more difficult. Cooling of the web also results in a higher requirement of energy in the dryer section. This is why attempts have been made to find solutions for heating the web to a suitable temperature so as to lower the viscosity of the water present in the web and, thus, to facilitate the pressing of water out of the web.

In paper machines, steam cylinders, steam boxes, and electric/gas infra-dryers have been used for heating of the web. A common feature of these prior-art solutions is considerable requirement of energy to obtain an adequate temperature of the web.

As is well known, steam cylinders have been used in such conventional paper machines in which the speed of the paper machine does not impose restrictions for their use. The field of application of the steam boxes has been mainly profiling of the web. In the prior-art solutions based on steam boxes, an increased capacity of a paper machine has been obtained indirectly via a more uniform moisture profile, whereby socalled overdrying has been avoided. However, by means of a steam box, an increase in the capacity of a paper machine cannot be obtained if the profile is uniform. Steam boxes have also been used in multi-nip "Sym-Press" (trade mark) presses between the press nips to heat the web. In the environment of a press section of a paper machine, the use of electric/gas infra-dryers for heating of the web has proved problematic, because said apparatuses are contaminated rapidly in this area, which deteriorates their efficiency.

As is well known, a Yankee press comprises a large-diameter Yankee cylinder that is heated from inside and a Yankee hood consisting of one or several blocks and formed over a part of the circumference of the cylinder, warm air being blown through the hood against the web so as to dry the web. Before the hood section, a Yankee press usually comprises one or several press rolls, which forms/form a press nip/nips together with the Yankee cylinder, in which nips water is removed out of the web by pressing. In the prior-art Yankee presses, it has not always been possible to raise the efficiency of the press nips to a sufficiently high level, because the web has had time to be cooled in the preceding steps, whereby the viscosity of the water has become higher and the removal of water in the press nips has not been so efficient. This has also resulted in a higher requirement of energy in view of the drying capacities of the Yankee cylinders and hoods.

From the prior art, devices and methods are also known which are based on blowing of air, in which warm and humid air has been blown against the web so as to heat the web and thereby to intensify both the pressing and the drying. However, in these prior-art solutions, very low values of humidity and temperature of the air have been used, so that the efficiency has been low. One prior-art solution based on blowing of air for intensification of the dewatering in a paper, board or pulp machine is described in the FI Patent No. 54,956. In this prior-art solution, warm and humid exhaust air from the dryer section or, as an alternative, warm and humid exhaust air from the pressurized process of a thermomechanical pulping plant has been used.

The object of the present invention is improvement/intensification of the operation of the Yankee press in a soft-tissue machine.

In view of achieving the objectives stated above, and those that will come out later, the method in accordance with the invention is characterized in that the exhaust air of the blow device is returned to the outlet/heat recovery of the air system of the Yankee hood, and that air is blown against the web at the proximity of the nip formed between the Yankee cylinder and the first press roll, before and near the first press roll, in the running direction of the web.

On the other hand, the device in accordance with the invention is characterized in that the exhaust chamber of the blow device communicates with the outlet and/or heat recovery of the air system of the Yankee hood for returning of the spent air, and that the blow device is placed at the proximity of the nip formed between the Yankee cylinder and the first press roll before and near the first press roll.

In the method of the invention, the web is heated by against the web blowing hot and humid air, whereby the web is heated by means of forced convection, on one hand, and when the evaporation energy of water present in the blow air is liberated as it is condensed in the surface fibres in the web, on the other hand. This results in lowering of the viscosity of the water present in the web and in easier pressing of the water present in the web.

Since the drying of the paper is often a factor that restricts the speed of a paper machine and since the dry solids content of the paper web after the press has an essential effect on the drying, thus, the present invention permits an increased speed of a paper machine with very little additional energy. Additional energy is needed for the electric motor of the blower only.

By means of the invention, the operation of a Yankee press can be intensified, whereby drying of the paper is more advantageous in view of the overall energy economy, because, in view of the energy economy, dewatering that takes place by pressing is substantially more advantageous than dewatering by evaporation.

The blow box of the device in accordance with the invention is provided with a blow-air chamber and with an exhaust-air chamber, and the exhaust air of the Yankee hood is used as the source of energy (blow air) for the blow box. The warm humid air is blown through the nozzles against the web, and the cooled and dried air is taken through the suction ducts provided in the blow box back to the air system of the Yankee hood, from which it can be passed further to heat recovery. In the device of the invention, a relatively high blow velocity is used. whereby contamination of the device can be prevented and, thus, the device of the invention is well suitable for the problematic environment in the press section of a paper machine.

By means of the device of the invention, it is also possible to adjust an uneven moisture profile by dividing the blow chamber into blocks, in which blocks the blow velocity (air quantity) can be regulated separately as required.

If it is not desirable to increase the capacity of a paper machine, by means of the invention it is also possible to lower the additional energy required in the dryer section, for the dry solids content of the web after the press becomes higher and, thereby, the requirement of drying power is lowered.

The method and the device in accordance with the invention are employed in press sections of paper machines that operate at speeds of 600...2200 m per min, and by means of the invention, an increase of about 3...10 %, as a rule about 5 %, in the running speed is achieved if the advantage obtained from the invention is used in the form of increased running speed.

The method and the device in accordance with the invention are suitable for use in connection with Yankee presses, in particular for gas-heated or high-temperature Yankee presses, for the manufacture of soft tissue.

In the following, the invention will be described in more detail with reference to the figures in the accompanying drawing, the invention being, however, by no means supposed to be strictly confined to the details of said illustrations.

Figure 1 is a schematic illustration of the principle of the method of the invention as applied to a Yankee press with two nips.

Figures 2A...2C are schematic illustrations of different alternative modes of circulation of air in connection with the invention.

Figure 3 is a schematic sectional view of a device in accordance with the invention taken in the direction of the web.

Figure 4 is a schematic sectional view of the device in accordance with the invention taken in the transverse direction of the web.

Figures 5A...5B are schematic illustrations of different alternative embodiments of the nozzle face of the device.

Figure 6 is a schematic illustration of the principle of the method of the invention as applied to a single-nip Yankee press.

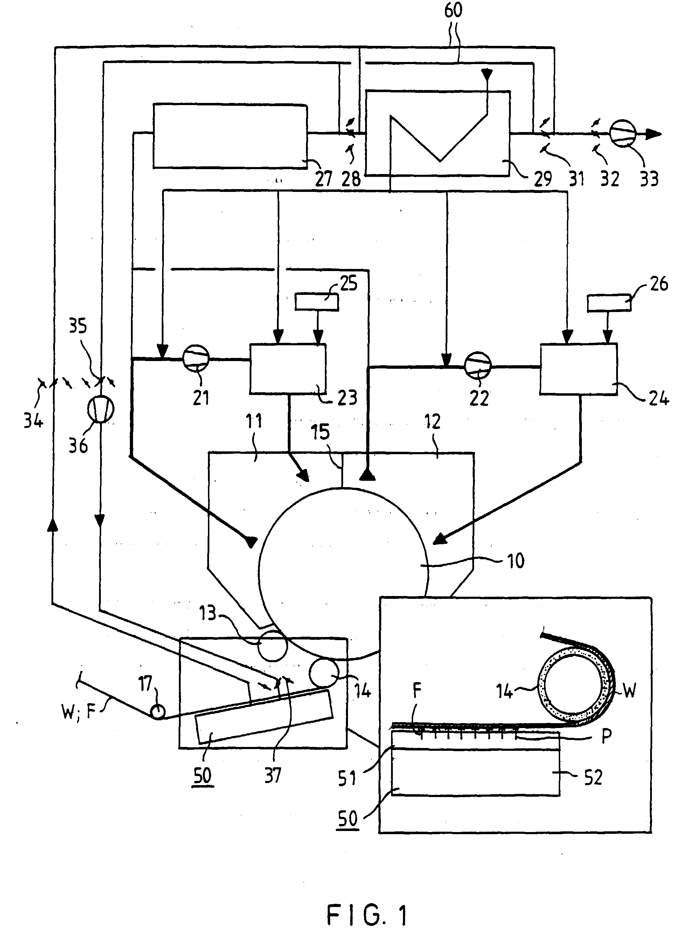

Fig. 1 shows a schematic exemplifying embodiment of the invention as applied to a Yankee press with two nips, said press comprising a large-diameter Yankee cylinder that is heated from inside, the hood 15 of said Yankee cylinder 10 consisting of two blocks, comprising the blocks 11 and 12. The blow air for the hood blocks 11,12 is heated by means of heaters 23,24, respectively. The fuel tanks of the heaters 23,24 are denoted with the reference numeral 25,26, respectively. The blower of the first block 11 of the hood 15 is denoted with the reference numeral 21, and the blower of the second block 12 of the hood 15 with the reference numeral 22. The temperature of the exhaust air 27 of the hood 15 is about 200...350°C and the humidity about 0.2...0.7 kg H₂O per kg of dry air. The members for regulation of the exhaust air 27 are denoted with the reference numeral 28. The exhaust air 27 is passed to the heat recovery 29 of the hood 15, from which the air is, if necessary, removed through the regulation members 31 and 32 and through the blower 33 or, if desired, returned to the air circulation of the hood 15 of blocks 11,12.

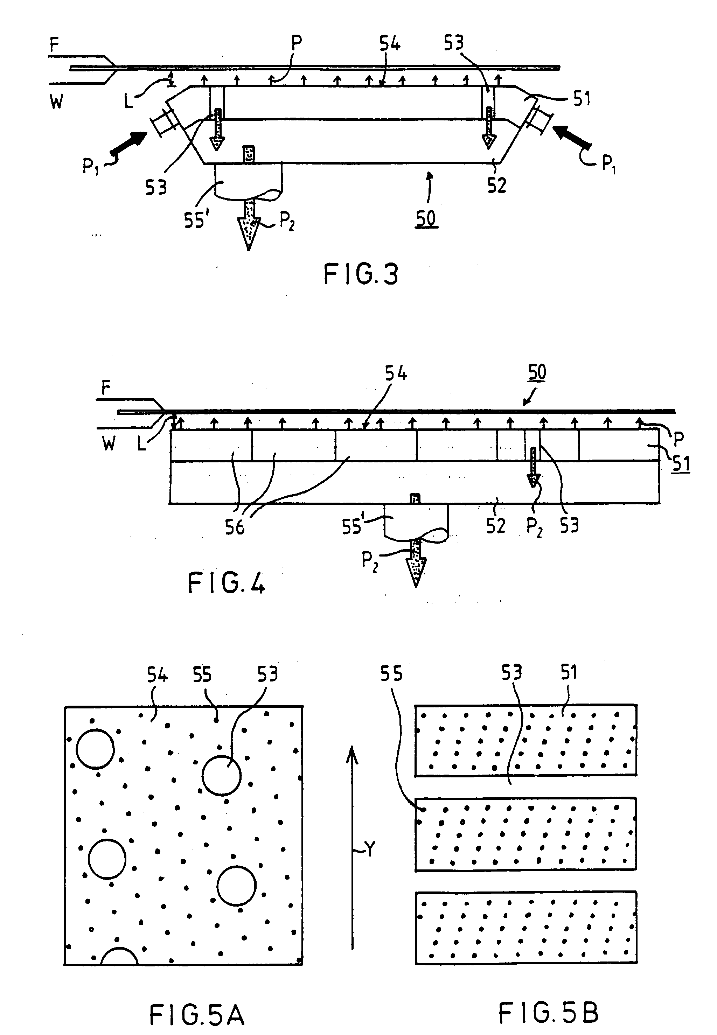

The exemplifying embodiment of a Yankee press shown in Fig. 1 comprises two nips, in which the press rolls 13 and 14 form two successive nips with the Yankee cylinder 10. The blow device 50 in accordance with the invention is placed at the proximity of the first press roll 14, before said press roll 14 in the running direction of the paper web W. The paper web W and the felt F are passed over a guide roll 17 to run over the blow device 50 into the first nip between the first press roll 14 and the Yankee cylinder 10, and from there further into the second nip formed by the second press roll 13 and the Yankee cylinder 10. As the source of energy for the blow box 50, i.e. as the blow air, the exhaust air from the Yankee hood 15 is used, which air is passed through the blow-velocity regulation member 35 and the blower 36 into the blow-air chamber 51 of the blow device 50, and the exhaust air is returned from the exhaust-air chamber 52 of the blow box 50 through the exhaust-air regulation member 34 to the heat recovery 29. By means of the blow device 50, the warm, humid air is blown through nozzles, preferably circular nozzles, against the paper web W, and the cooled and dried air is recovered through the suction ducts / exhaust-air pipes 53 provided in the blow box 50 back to the air system of the Yankee hood 15, from where it can be passed further to the heat recovery 29. The output of the blow device 50 is regulated by means of regulation members 35 placed in the air ducts and/or distribution ducts. In the blow device 50, a relatively high blow velocity is used, which prevents contamination of the device 50. By means of the blow device 50, it is also possible to correct an uneven moisture profile of the paper web by dividing the blow chamber 51 into blocks 56 (Fig. 4), in which the blow velocities can be regulated individually by means of the regulation members 37. In Fig. 1, the reference numeral 60 represents an alternative air intake/exhaust position of the blow device 50.

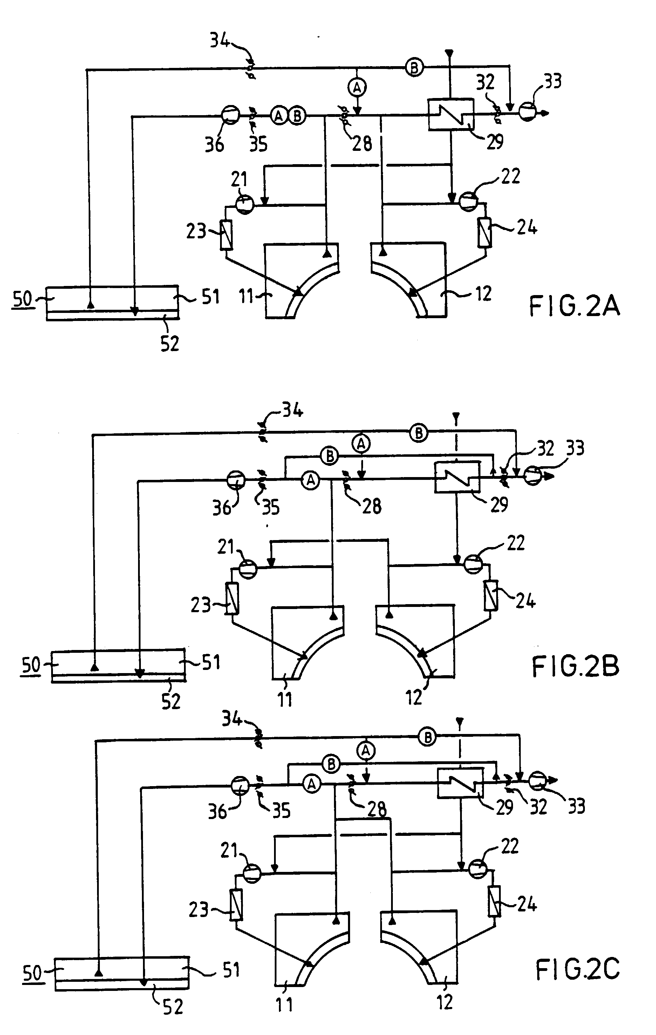

Figs. 2A...2C illustrate different alternative modes of circulation of air usable in the arrangement in accordance with the invention.

In the alternatives A and B illustrated in Fig. 2A, the circulation of air in the Yankee hood blocks 11,12 is connected in parallel, and air is passed to the blow box 50 as follows:
A. the blow air for the blow box 50 is taken from the outlet of the block 11 before possible heat recovery 29, and the exhaust air from the blow box 50 is passed back to the outlet of the block 11 of the air system of the hood 15 before possible heat recovery 29,
B. the blow air for the blow box 50 is taken from the outlet of the block 11 before possible heat recovery 29, and the exhaust air from the blow box 50 is passed back to the common outlet of the air system of the hood 15 after possible heat recovery 29.

In the alternatives A and B as shown in Fig. 2B, the circulation of air of the Yankee hood blocks 11,12 is connected in series. The air is passed to the blow box 50 as follows:
A. the blow air for the blow box 50 is taken from the outlet of the block 11 before possible heat recovery 29, and the exhaust air from the blow box 50 is passed back to the outlet of the air system of the hood 15 before possible heat recovery,
B. the blow air for the blow box 50 is taken from the outlet of the block 11 after possible heat recovery 29, and the exhaust air from the blow box 50 is passed back to the outlet of the air system of the hood 15, after possible heat recovery 29.

In the alternatives A and B shown in Fig. 2C, the circulation of air of the Yankee hood blocks 11,12 is connected in parallel. Air is passed to the blow box 50 as follows:
A. the blow air for the blow box 50 is taken from the common outlet of the hood blocks 11,12 before possible heat recovery 29, and the exhaust air of the blow box 50 is passed back to the common outlet of the air system of the hood 15, before possible heat recovery 29,
B. the blow air for the blow box 50 is taken from the common outlet of the hood blocks 11,12 after possible heat recovery 29, and the exhaust air from the blow box 50 is passed back to the common outlet of the air system of the hood 15 after possible heat recovery.

In all of the alternatives suggested above, the alternatives A and B may also be cross-connected, i.e. the air for the blow box 50 is taken before the heat recovery 29, and the exhaust air from the blow box 50 is returned to the air system of the hood 15 after the heat recovery 29.

In addition to the versions illustrated in the figures, it is, of course, also possible to employ a hood 15 that comprises three blocks, the air being taken to the blow box 50 from one, two, or from the three blocks. If air is taken from one block only, it is preferably taken from the block placed next to the wet end.

In the blow device 50 in accordance with the invention, the following parameters are used: the temperature of the blow air is 130...450°C, preferably 200...350°C, and the humidity of the blow air is 0.100...1.000 kg of H₂O per kg of dry air, preferably 0.200...0.700 kg of H₂O per kg of dry air, the blow velocity of the blow device 50 is 0...130 metres per second, preferably 60...120 m per s.

Fig. 3 is a schematic sectional view of the blow device 50 taken in the direction of the web. The felt is denoted with the reference F, and the web with the reference W. The blow box 50 comprises a blow chamber 51 and an exhaust chamber 52. Exhaust air P₁ from the Yankee hood 15 is passed into the device 50, into its blow chamber 51, said air being blown against the web W as the blow P through the nozzles, preferably circular nozzles, placed in the nozzle face 54. The exhaust air P₂ is passed through the exhaust air pipes 53 in the suction ducts into the exhaust chamber 52, from where the exhaust air P₂ is passed further to the outlet of the air system of the Yankee hood 15.

Fig. 4 is a schematic sectional view of the blow device taken in the transverse direction of the web. The felt is denoted with the reference F, and the web with the reference W. In the exemplifying embodiment illustrated in Fig. 4, the blow chamber 51 has been divided into so-called profiling chambers 56, in which the air flow of each chamber 56 can be regulated separately. Air is blown as an air flow P against the web W out of the profiling chambers 56 of the blow chamber 51 through the nozzles in the nozzle face 54. The exhaust air P₂ is passed out of the space between the blow box 50 and the web W through the exhaust pipes 53 into the exhaust chamber 52, from which the air is passed further into the duct 55' and, thus, into the outlet of the air system of the Yankee hood 15.

Figs. 5A and 5B illustrate two different alternative nozzle faces 54 of the blow device 50. The blow nozzles are denoted with the reference numeral 55, and the exhaust-air pipes / exhaust-air slots with the reference numeral 53. The machine direction is represented by the reference arrow Y.

In Fig. 5A, the small-diameter blow-nozzle openings 55 and the large-diameter exhaust-air pipes 53 are placed as uniformly spaced on the plane nozzle face 54 parallel to the run of the web W. In Fig. 5B, the nozzle face 54 has been divided into blocks, in which portions provided with blow nozzles 55 and portions provided with exhaust-air pipes / exhaust-air slots 53 alternate.

The diameter of the blow nozzles 55 is about 5...10 mm, and the diameter of the exhaust-air pipes 53 is about 50...100 mm. If an exhaust-air slot 53 is used, its width is about 20...100 mm. The open area of the blow nozzles 55 in proportion to the nozzle-face area is about 1...5 %, and the blow distance L is about 15...50 mm.

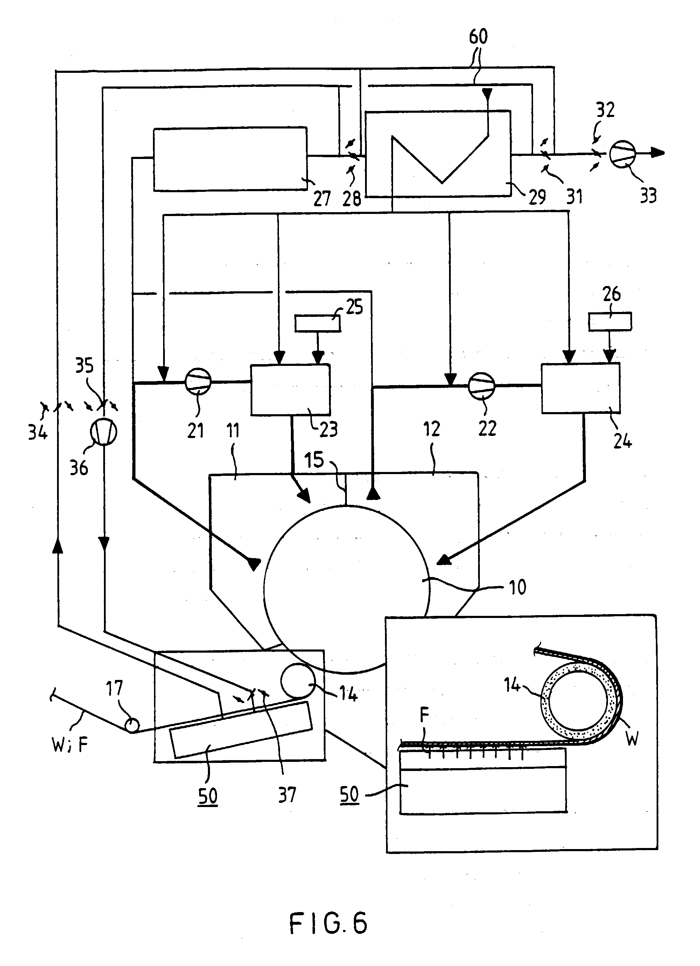

Fig. 6 is a schematic illustration of a second exemplifying embodiment of the principle of the method of the invention in a single-nip Yankee press. In the other respects, the illustration in Fig. 6 is similar to that shown in Fig. 1. The Yankee cylinder 10 is fitted to form a nip with the press roll 14.

Above, the invention has been described with reference to some preferred embodiments of same only. This is, however, not supposed to confine the invention to these features alone, but many modifications and variations are possible within the scope of the inventive idea defined in the following patent claims.

## Claims

1. Method for intensification of the operation of a Yankee press in a soft-tissue machine, in which Yankee press the web (W) is pressed in one or several nips formed between a Yankee cylinder (10) and at least a press roll (13,14) and the web (W) is dried on the Yankee cylinder (10) by blowing against the web (W) hot and humid air (P₁) that is introduced through the Yankee hood (15) consisting of one or more blocks (11,12), in which method a blow device (50) is used which blows the hot and humid air against the web (W), the hot and humid blow air (P₁) of the blow device (50) being taken from the outlet of the heat recovery (29) of an air system of the Yankee hood (15), **characterized** in that the exhaust air (P₂) of the blow device (50) is returned to the outlet and/or to the heat recovery (29) of the air system of the Yankee hood (15), that the hot and humid air is blown against the web (W) at the proximity of the nip formed between the Yankee cylinder (10) and the first press roll (14), before and near the first press roll, in the running direction of the web, and that the hot and humid air (P₁) is blown against the web so that the web (W) is heated by means of forced convection, on one hand, and when the evaporation energy of water present in the blow air is liberated as it is condensed in the web surface, on the other hand, whereby the viscosity of the water present in the web is lowered and the pressing quality of the water present in the web is improved.

2. Method as claimed in claim 1, **characterized** in that the air circulation of the Yankee hood blocks (11,12) is connected in parallel, that the blow air for the blow device (50) is taken from the outlet of the first block (11) of the Yankee hood (15) before possible heat recovery (29), and that the exhaust air from the blow device (50) is passed back to the outlet of the first block (11) of the air system of the hood (15) before possible heat recovery (29).

3. Method as claimed in claim 1, **characterized** in that the air circulation of the Yankee hood blocks (11,12) is connected in parallel, that the blow air for the blow device (50) is taken from the outlet of the first block (11) of the Yankee hood (15) before possible heat recovery (29), and that the exhaust air from the blow device (50) is passed back to the common outlet of the air system of the Yankee hood (15) after possible heat recovery (29).

4. Method as claimed in claim 1, **characterized** in that the air circulation of the Yankee hood blocks (11,12) is connected in series, that the blow air for the blow device (50) is taken from the outlet of the first block (11) of the Yankee hood (15) before possible heat recovery (29), and that the exhaust air from the blow device (50) is passed back to the outlet of the air system of the Yankee hood (15) before possible heat recovery (29).

5. Method as claimed in claim 1, **characterized** in that the air circulation of the Yankee hood blocks (11,12) is connected in series, that the blow air for the blow device (50) is taken from the outlet of the first block (11) of the Yankee hood (15) after possible heat recovery (29), and that the exhaust air from the blow device (50) is passed back to the outlet of the air system of the Yankee hood (15) after possible heat recovery (29).

6. Method as claimed in claim 1, **characterized** in that the circulation of air of the Yankee hood blocks (11,12) is connected in parallel, that the blow air for the blow device (50) is taken from the common outlet of the first and the second block (11,12) of the Yankee hood (15) before possible heat recovery (29), and that the exhaust air from the blow device is passed back to the common outlet of the air system of the Yankee hood (15) before possible heat recovery (29).

7. Method as claimed in claim 1, **characterized** in that the air circulation of the Yankee hood blocks (11,12) is connected in parallel, that the blow air for the blow device (50) is taken from the common outlet of the hood blocks (11,12) after possible heat recovery (29), and the exhaust air from the blow device (50) is passed back to the common outlet of the air system of the Yankee hood (15) after possible heat recovery (29).

8. Method as claimed in 1, **characterized** in that the blow air for the blow device (50) is taken before the heat recovery (29) of the air system of the Yankee hood (15), and that the exhaust air from the blow device (50) is returned to the air system of the Yankee hood (15) after the heat recovery (29).

9. Device for carrying out the method as claimed in the claims 1 to 8 for intensification of the operation of the Yankee press in a soft-tissue machine, which Yankee press comprises a Yankee cylinder (10) and one or several press rolls (13,14) as well as a Yankee hood (15) consisting of one or more blocks (11,12), said device being a blow device (50), which comprises a blow chamber (51), an exhaust chamber (52), blow nozzles (55) for the blowing of hot and humid air (P₁) against the web (W) and exhaust-air ducts (53) for the removal of the spent air (P₂), the blow chamber (51) of the blow device (50) communicating with the outlet and/or heat recovery (29) of an air system of the Yankee hood (15) for the taking of the blow air, **characterized** in that the exhaust chamber (52) of the blow device (50) communicates with the outlet and/or heat recovery (29) of the air system of the Yankee hood (15) for returning of the spent air (P₂), and that the blow device (50) is placed at the proximity of the nip formed between the Yankee cylinder (10) and the first press roll (14) before and near the first press roll (14) such that the hot and humid air (P₁) blown by it against the web (W) heats the web by forced convection.

10. Device as claimed in claim 9, **characterized** in that the plane nozzle face (54) of the blow device (50), which face is parallel to the run of the web (W), comprises a number of small-diameter blow-nozzle openings (55) and a number of exhaust openings (53) of larger diameter.

11. Device as claimed in claim 9 or 10, **characterized** in that the nozzle face (54) of the blow device (50) is formed as consisting of blocks, so that the nozzle face (54) consists of alternating portions provided with blow nozzles (55) and portions provided with exhaust-air pipes / exhaust-air slots (53).

12. Device as claimed in any of the claims 9 to 11, **characterized** in that the blow chamber (51) of the blow device (50) is divided in profiling chambers (56), in which the air flow in each chamber (56) can be regulated separately so as to regulate the moisture profile of the web (W).

13. Device as claimed in any of the claims 9 to 12, **characterized** in that the blow device (50) comprises regulation members (35,34) for regulation of the velocity/pressure of the blow air.

## Patentansprüche

1. Verfahren zur Intensivierung der Wirkung einer Yankeepresse in einer Tissuepapiermaschine, in welcher Yankeepresse die Bahn (W) in einem oder mehreren Spalten gepreßt wird, die zwischen einem Yankeezylinder (10) und zumindest einer Pressenwalze (13, 14) ausgebildet sind, wobei die Bahn (W) dadurch an dem Yankeezylinder (10) getrocknet wird, daß gegen die Bahn (W) heiße und feuchte Luft (P₁) geblasen wird, die durch den aus einem oder mehreren Blöcken (11, 12) bestehenden Yankeeabzug (15) eingeführt wird, in welchem Verfahren eine Gebläsevorrichtung (50) verwendet wird, die die heiße und feuchte Luft gegen die Bahn (W) bläst, wobei die heiße und feuchte Luft (P₁) der Gebläsevorrichtung (50) aus dem Auslaß der Wärmerückgewinnung (29) eines Luftsystems des Yankeeabzuges (15) entnommen wird, dadurch gekennzeichnet, daß die Abluft (P₂) der Gebläsevorrichtung (50) zu dem Auslaß und/oder zu der Wärmerückgewinnung (29) des Luftsystems des Yankeeabzuges (15) rückgeführt wird, daß die heiße und feuchte Luft in der Nähe des zwischen dem Yankeezylinder (10) und der ersten Pressenwalze (14) gebildeten Spalts gegen die Bahn (W) geblasen wird, und zwar in Laufrichtung der Bahn vor und nahe der ersten Pressenwalze, und daß die heiße und feuchte Luft (P₁) derart gegen die Bahn geblasen wird, daß die Bahn (W) erwärmt wird, und zwar einerseits mittels erzwungener Konvektion und andererseits, wenn die Verdampfungsenergie von in der Gebläseluft vorhandenem Wasser freigesetzt wird, wenn es in der Bahnoberfläche kondensiert ist, wodurch die Viskosität des in der Bahn vorhandenen Wassers gesenkt wird und die Pressungsqualität des in der Bahn vorhandenen Wassers verbessert wird.

2. Verfahren gemäß Patentanspruch 1, dadurch gekennzeichnet, daß die Luftzirkulation der Yankeeabzugsblöcke (11, 12) parallel verbunden ist, daß die Gebläseluft für die Gebläsevorrichtung (50) vor einer möglichen Wärmerückgewinnung (29) aus dem Auslaß des ersten Blocks (11) des Yankeeabzugs (15) entnommen wird, und daß die Abluft aus der Gebläsevorrichtung (50) vor einer möglichen Wärmerückgewinnung (29) zu dem Auslaß des ersten Blocks (11) des Luftsystems des Abzugs (15) zurückgeleitet wird.

3. Verfahren gemäß Patentanspruch 1, dadurch gekennzeichnet, daß die Luftzirkulation der Yankeeabzugsblöcke (11, 12) parallel verbunden ist, daß die Gebläseluft für die Gebläsevorrichtung (50) vor einer möglichen Wärmerückgewinnung (29) aus dem Auslaß des ersten Blocks (11) des Yankeeabzuges (15) entnommen wird, und daß die Abluft aus der Gebläsevorrichtung (50) nach einer möglichen Wärmerückgewinnung (29) zu dem gemeinsamen Auslaß des Luftsystemes des Yankeeabzugs (15) zurückgeleitet wird.

4. Verfahren gemäß Patentanspruch 1, dadurch gekennzeichnet, daß die Luftzirkulation der Yankeeabzugsblöcke (11, 12) in Reihe verbunden ist, daß die Gebläseluft für die Gebläsevorrichtung (50) vor einer möglichen Wärmerückgewinnung (29) aus dem Auslaß des ersten Blocks (11) des Yankeeabzuges (15) entnommen wird, und daß die Abluft aus der Gebläsevorrichtung (50) vor einer möglichen Wärmerückgewinnung (29) zu dem Auslaß des Luftsystems des Yankeeabzuges (15) zurückgeleitet wird.

5. Verfahren gemäß Patentanspruch 1, dadurch gekennzeichnet, daß die Luftzirkulation der Yankeeabzugsblöcke (11, 12) in Reihe verbunden ist, daß die Gebläseluft für die Gebläsevorrichtung (50) nach einer möglichen Wärmerückgewinnung (29) aus dem Auslaß des ersten Blocks (11) des Yankeeabzugs (15) entnommen wird, und daß die Abluft aus der Gebläsevorrichtung (50) nach einer möglichen Wärmerückgewinnung (29) zu dem Auslaß des Luftsystems des Yankeeabzuges (15) zurückgeleitet wird.

6. Verfahren gemäß Patentanspruch 1, dadurch gekennzeichnet, daß die Luftzirkulation der Yankeeabzugsblöcke (11, 12) parallel verbunden ist, daß die Gebläseluft für die Gebläsevorrichtung (50) vor einer möglichen Wärmerückgewinnung (29) aus dem gemeinsamen Auslaß des ersten und des zweiten Blocks (11, 12) des Yankeeabzugs (15) entnommen wird, und daß die Abluft aus der Gebläsevorrichtung vor einer möglichen Wärmerückgewinnung (29) zu dem gemeinsamen Auslaß des Luftsystems des Yankeeabzugs (15) zurückgeleitet wird.

7. Verfahren gemäß Patentanspruch 1, dadurch gekennzeichnet, daß die Luftzirkulation der Yankeeabzugsblöcke (11, 12) parallel verbunden ist, daß die Gebläseluft für die Gebläsevorrichtung (50) nach einer möglichen Wärmerückgewinnung aus dem gemeinsamen Auslaß der Abzugsblöcke (11, 12) entnommen wird, wobei die Abluft aus der Gebläsevorrichtung (50) nach einer möglichen Wärmerückgewinnung (29) zu dem gemeinsamen Auslaß des Luftsystems des Yankeeabzuges (15) zurückgeleitet wird.

8. Verfahren gemäß Patentanspruch 1, dadurch gekennzeichnet, daß die Gebläseluft für die Gebläsevorrichtung (50) vor der Wärmerückgewinnung (29) des Luftsystems des Yankeeabzuges (15) entnommen wird, und daß die Abluft aus der Gebläsevorrichtung (50) nach der Wärmerückgewinnung (29) zu dem Luftsystem des Yankeeabzuges (15) zurückgeführt wird.

9. Vorrichtung zur Durchführung des Verfahrens gemäß den Patentansprüchen 1 bis 8 zur Intensivierung der Wirkung der Yankeepresse in einer Tissuepapiermaschine, welche Yankeepresse einen Yankeezylinder (10) und eine oder mehrere Pressenwalzen (13, 14) sowie einen aus einem oder mehreren Blöcken (11, 12) bestehenden Yankeeabzug (15) aufweist, wobei die Vorrichtung eine Gebläsevorrichtung (50) ist, die eine Gebläsekammer (51), eine Abluftkammer (52), Gebläsedüsen (55) für das Blasen von heißer und feuchter Luft (P₁) gegen die Bahn (W) und Abluftkanalleitungen (53) für den Abzug der verbrauchten Luft (P₂) aufweist, wobei die Gebläsekammer (51) der Gebläsevorrichtung (50) für die Entnahme der Gebläseluft mit dem Auslaß und/oder der Wärmerückgewinnung (29) eines Luftsystems des Yankeeabzuges (15) in Verbindung steht, dadurch gekennzeichnet, daß die Abluftkammer (52) der Gebläsevorrichtung (50) für die Rückführung der verbrauchten Luft (P₂) mit dem Auslaß und/oder der Wärmerückgewinnung (29) des Luftsystems des Yankeeabzuges (15) in Verbindung steht, und daß die Gebläsevorrichtung (50) in der Nähe des zwischen dem Yankeezylinder (10) und der ersten Pressenwalze (14) ausgebildeten Spalts angeordnet ist, und zwar vor und nahe der ersten Pressenwalze (14), so daß die durch sie gegen die Bahn (W) geblasene heiße und feuchte Luft (P₁) die Bahn mittels erzwungener Konvektion erwärmt.

10. Vorrichtung gemäß Patentanspruch 9, dadurch gekennzeichnet, daß die ebene Düsenfläche (54) der Gebläsevorrichtung (50), welche Fläche parallel zum Lauf der Bahn (W) ist, eine Anzahl von mit kleinem Durchmesser versehenen Gebläsedüsenöffnungen (55) und eine Anzahl von Abzugöffnungen (53) größeren Durchmessers aufweist.

11. Vorrichtung gemäß Patentanspruch 9 oder 10, dadurch gekennzeichnet, daß die Düsenfläche (54) der Gebläsevorrichtung (50) aus Blöcken bestehend ausgebildet ist, so daß die Düsenfläche (54) aus alternierenden Abschnitten mit Gebläsedüsen (55) und Abschnitten mit Abluftleitungen/Abluftschlitzen (53) besteht.

12. Vorrichtung gemäß einem der Patentansprüche 9 bis 11, dadurch gekennzeichnet, daß die Gebläsekammer (51) der Gebläsevorrichtung (50) in Profilierkammern (56) unterteilt ist, in welchen die Luftströmung in jeder Kammer (56) separat regulierbar ist, um das Feuchtigkeitsprofil der Bahn (W) zu regulieren.

13. Vorrichtung gemäß einem der Patentansprüche 9 bis 12, dadurch gekennzeichnet, daß die Gebläsevorrichtung (50) Regulierelemente (35, 34) zur Regulierung der Geschwindigkeit/des Druckes der Gebläseluft aufweist.

## Revendications

1. Procédé pour intensifier le fonctionnement d'une presse Yankee dans une machine de fabrication de tissu ouaté, presse Yankee dans laquelle la bande (W) est pressée dans un ou plusieurs interstices formés entre un cylindre Yankee (10) et au moins un rouleau de pressage (13,14), et la bande (W) est séchée sur le cylindre Yankee (10) par soufflage sur la bande (W) d'un air chaud et humide (P₁) introduit par la hotte Yankee (15) constituée d'un ou de plusieurs blocs (11,12), procédé selon lequel on utilise un dispositif de soufflage (50) qui souffle l'air chaud et humide sur la bande (W), l'air chaud et humide de soufflage (P₁) du dispositif de soufflage (50) étant prélevé à la sortie du système de récupération de chaleur (29) d'un système de circulation d'air de la hotte Yankee (15), caractérisé en ce que l'air d'évacuation (P₂) du dispositif de soufflage (50) est renvoyé à la sortie et/ou au système de récupération de chaleur (29) du système de circulation d'air de la hotte Yankee (15), que l'air chaud et humide est soufflé sur la bande (W) à proximité de l'interstice formé entre le cylindre Yankee (10) et le premier rouleau de pressage (14), en avant et à proximité du premier rouleau de pressage, dans la direction de défilement de la bande, et que l'air chaud et humide (P₁) est soufflé sur la bande de sorte que la bande (W) est chauffée d'une part sous l'effet d'une convection forcée et d'autre part lorsque l'énergie d'évaporation de l'eau présente dans l'air de soufflage est libérée lorsqu'elle est condensée sur la surface de la bande, ce qui a pour effet que la viscosité de l'eau présente dans la bande est réduite et que la qualité de pressage de l'eau présente dans la bande est améliorée.

2. Procédé selon la revendication 1, caractérisé en ce que la circulation d'air des blocs (11,12) de la hotte Yankee est connectée en parallèle, que l'air de soufflage pour le dispositif de soufflage (50) est prélevé à la sortie du premier bloc (11) de la hotte Yankee (15) avant une éventuelle récupération de chaleur (29), et que l'air sortant du dispositif de soufflage (50) est renvoyé à la sortie du premier bloc (11) du système de circulation d'air de la hotte (15) avant une éventuelle récupération de chaleur (29).

3. Procédé selon la revendication 1, caractérisé en ce que la circulation d'air des blocs (11,12) de la hotte Yankee est connectée en parallèle, que l'air de soufflage du dispositif de soufflage (50) est prélevé à la sortie du premier bloc (11) de la hotte Yankee (15) avant une éventuelle récupération de chaleur (29), et que l'air sortant du dispositif de soufflage (50) est renvoyé à la sortie commune du système de circulation d'air de la hotte yankee (15) après une éventuelle récupération de chaleur (29).

4. Procédé selon la revendication 1, caractérisé en ce que la circulation d'air des blocs (11,12) de la hotte Yankee est connectée en série, que l'air de soufflage pour le dispositif de soufflage (50) est prélevé à la sortie du premier bloc (11) à la hotte Yankee (15) avant une éventuelle récupération de chaleur (29), et que l'air sortant du dispositif de soufflage (50) est renvoyé à la sortie du système de circulation d'air de la hotte Yankee (15) avant une éventuelle récupération de chaleur (29).

5. Procédé selon la revendication 1, caractérisé en ce que la circulation d'air des blocs (11,12) de la hotte Yankee est connectée en série, que l'air de soufflage pour le dispositif de soufflage (50) est prélevé à la sortie du premier bloc (11) de la hotte Yankee (15) après une éventuelle récupération de chaleur (29), et que l'air sortant du dispositif de soufflage (50) est renvoyé à la sortie du système de circulation d'air de la hotte Yankee (15), après une éventuelle récupération de chaleur (29).

6. Procédé selon la revendication 1, caractérisé en ce que la circulation d'air des blocs (11,12) de la hotte Yankee est connectée en parallèle, que l'air de soufflage pour le dispositif de soufflage (50) est prélevé à la sortie commune des premier et second blocs (11,12) de la hotte Yankee (15) avant une éventuelle récupération de chaleur (29), et que l'air sortant du dispositif de soufflage est renvoyé à la sortie commune du système de circulation d'air de la hotte Yankee (15) avant une éventuelle récupération de chaleur (29).

7. Procédé selon la revendication 1, caractérisé en ce que la circulation d'air des blocs (11,12) de la hotte Yankee est connectée en parallèle, que l'air de soufflage pour le dispositif de soufflage (50) est prélevé à la sortie commune des premier et second blocs (11,12) de la hotte Yankee (15) après une éventuelle récupération de chaleur (29), et que l'air sortant du dispositif de soufflage (50) est renvoyé à la sortie commune du système de circulation d'air de la hotte Yankee (15) après une éventuelle récupération de chaleur (29).

8. Procédé selon la revendication 1, caractérisé en ce que l'air de soufflage pour le dispositif de soufflage (50) est prélevé en amont du dispositif de récupération de chaleur (29) du système de circulation d'air de la hotte Yankee (15), et que l'air sortant du dispositif de soufflage (50) est renvoyé au système de circulation d'air de la hotte Yankee (15) en aval du dispositif de récupération de chaleur (29).

9. Dispositif pour la mise en oeuvre du procédé selon les revendications 1 à 8 pour l'intensification du fonctionnement de la presse Yankee dans une machine de fabrication de tissu ouaté, laquelle presse Yankee comprend un cylindre Yankee (10) et un ou plusieurs rouleaux de pressage (13,14) ainsi qu'une hotte Yankee (15) constituée d'un ou de plusieurs blocs (11,12); ledit dispositif étant un dispositif de soufflage (50) qui comprend une chambre de soufflage (51), une chambre d'évacuation (52), des buses de soufflage (55) pour le soufflage d'un air chaud et humide (P₁) sur la bande (W) et des conduits d'évacuation (53) d'air servant à éliminer l'air utilisé (P₂), la chambre de soufflage (51) du dispositif de soufflage (50) communiquant avec la sortie et/ou le dispositif de récupération de chaleur (29) d'un système de circulation d'air de la hotte Yankee (15) pour le prélèvement de l'air de soufflage, caractérisé en ce que la chambre d'évacuation (52) du dispositif de soufflage (50) communique avec la sortie et/ou le dispositif de récupération de chaleur (29) du système de circulation d'air de la hotte Yankee (15) pour renvoyer l'air utilisé (P₂), et que le dispositif de soufflage (50) est placé à proximité de l'interstice formé entre le cylindre Yankee (10) et le premier rouleau de pressage (14) en avant et à proximité du premier rouleau de pressage (14) de telle sorte que l'air chaud et humide (P₁) soufflé par ce dispositif sur la bande (W) chauffe la bande par convection forcée.

10. Dispositif selon la revendication 9, caractérisé en ce que la face plane (54) de buse du dispositif de soufflage (50), face qui est parallèle à l'étendue de la bande (W), comprend un certain nombre d'ouvertures de buse de soufflage (55) de petit diamètre et un certain nombre d'ouvertures d'évacuation (53) de diamètre plus important.

11. Dispositif selon la revendication 9 ou 10, caractérisé en ce que la face (54) de buse du dispositif de soufflage (50) est agencée sous la forme de blocs, de sorte que la face (54) de buse est constituée par des parties alternées pourvues de buses de soufflage (55) et de parties comportant des canalisations pour l'air d'évacuation ou des fentes pour l'air d'évacuation (53).

12. Dispositif selon l'une quelconque des revendications 9 à 11, caractérisé en ce que la chambre de soufflage (51) du dispositif de soufflage (50) est subdivisée en des chambres de profilage (56) dans lesquelles l'écoulement d'air dans chaque chambre (56) peut être réglé séparément, pour le réglage du profil d'humidité de la bande (W).

13. Dispositif selon l'une quelconque des revendications 9 à 12, caractérisé en ce que le dispositif de soufflage (50) comprend des éléments de régulation (35,34) servant à régler la vitesse ou la pression de l'air de soufflage.
